(19) Europäisches Patentamt
European Patent Office
Office européen des brevets

(11) **EP 1 677 196 A2**

(12) **EUROPÄISCHE PATENTANMELDUNG**

(43) Veröffentlichungstag:
**05.07.2006 Patentblatt 2006/27**

(51) Int Cl.:
*G06F 11/34* (2006.01)   *G06F 11/07* (2006.01)

(21) Anmeldenummer: **05028027.0**

(22) Anmeldetag: **21.12.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **30.12.2004 DE 102004063446**

(71) Anmelder: **Landis+Gyr GmbH**
**90459 Nürnberg (DE)**

(72) Erfinder: **Reissinger, Achim**
**91522 Ansbach (DE)**

(74) Vertreter: **Bauerschmidt, Peter et al**
**Rau, Schneck & Hübner**
**Patentanwälte**
**Königstrasse 2**
**90402 Nürnberg (DE)**

(54) **Vorrichtung zum Speichern von Ereignissen sowie Verfahren zum Abspeichern von Ereignissen**

(57) Beschrieben wird eine Vorrichtung sowie ein Verfahren zum Speichern von Ereignissen mit einer Speicheranordnung, die mit n Ereignisquellen $E_i$, mit i = 1,..., n, in Verbindung steht, deren Ereignisse $E_{ij}$, mit j= 1, 2, 3, ..., zumindest temporär in die Speicheranordnung abspeicherbar sind.

Dieser Ereignisspeicher dient der Protokollierung und Archivierung von Ereignissen technischer Art, die den Betriebszustand technischer Geräte charakterisieren.

Die Erfindung zeichnet sich dadurch aus, dass die Speicheranordnung in eine erste und zweite Speicherstufe (S1,S2) unterteilbar ist, dass die erste Speicherstufe (S1) n einzelne Speichereinheiten ($a_1$,..., $a_n$) aufweist, von denen jede Speichereinheit mit einer der n Ereignisquellen $E_i$ in Verbindung steht, dass die zweite Speicherstufe (S2) eine weitere Speichereinheit (b) aufweist, mit der die n Speichereinheiten ($a_1$,...,$a_n$) in Verbindung stehen, und dass die weitere Speichereinheit (b) eine Speicherkapazität (I) aufweist, die gleich oder größer jener Speicherkapazität (k) der jeweils einzelnen n Speichereinheiten ($a_1$,...,$a_n$) ist.

Fig. 1

**Beschreibung**

Die Erfindung bezieht sich auf eine Vorrichtung zum Speichern von Ereignissen mit einer Speicheranordnung, die mit n Ereignisquellen $E_i$, mit i = 1,..., n, in Verbindung steht, deren Ereignisse $E_{ij}$, mit j= 1, 2, 3, ..., zumindest temporär in die Speicheranordnung abspeicherbar sind. Ferner wird ein Verfahren zum Speichern von Ereignissen in einer derart ausgebildeten Speicheranordnung beschrieben.

Speicheranordnungen, zum Speichern von Ereignissen, oder kurz Ereignisspeicher genannt, dienen typischerweise zur Protokollierung und Archivierung von Ereignissen, die typischerweise von technischer Art sind und den Betriebszustand technischer Geräte zu charakterisieren vermögen. Gilt es beispielsweise die Zuverlässigkeit von in Betrieb befindlichen Messgeräten oder Zählereinrichtungen zu dokumentieren, so ist es erforderlich die Funktionsqualität des jeweiligen Gerätes repräsentierende Informationen zu generieren und diese zum Zwecke einer nachträglichen Dokumentation entsprechend abzuspeichern. Zwar ist es bekannt, die Informationen oder Ereignisse als kontinuierliche Abfolge einzelner Messwerte in jeweils zeitlich serieller Abfolge auf ein Speichermedium abzuspeichern, doch sind dem Speicherumfang wenn nicht in erster Linie technische Grenzen, so doch zumindest finanzielle Grenzen gesetzt, so dass es unpraktikabel ist und einen unverhältnismäßig hohen Aufwand bedeutet, sämtliche erfasste Ereignisse in immerwährender Form abzuspeichern.

Bekannte gattungsgemäße Ereignisspeicher sehen daher so genannte lineare Ereignisspeicher vor, die über eine begrenzte Speichertiefe verfügen und in die jeweils auftretenden Ereignisse sowohl in zeitlicher als auch serieller Abfolge abgespeichert werden. Derartige lineare Ereignisspeicher arbeiten auf der Grundlage eines linearen Schieberegisters, das für gewöhnlich aus einer Vielzahl in Serie geschalteter einzelner Speicherzellen besteht. Der Speichervorgang einer Vielzahl von Ereignissen in einem derart ausgebildeten linearen Ereignisspeicher erfolgt in serieller Abfolge, d.h. einzelne Ereignisse werden zeitlich nacheinander in linear nebeneinander angeordneten Speicherzellen abgespeichert. Ist der lineare Ereignisspeicher teilweise bereits mit Ereignissen befüllt, so erfolgt vor dem Abspeichern eines weiteren Ereignisses zunächst ein Umspeichern aller bereits im linearen Ereignisspeicher abgespeicherten Ereignisse um jeweils eine Speicherzelle. Auf diese Weise wird ein freier Eingangsspeicherplatz geschaffen, in den das jüngste Ereignis abspeicherbar ist. Ist hingegen der lineare Ereignisspeicher vollständig belegt, so wird jeweils vor dem Abspeichern eines neuen Ereignisses das jeweils älteste im linearen Energiespeicher abgespeicherte Ereignis unwiederbringlich gelöscht. Aus diesem Grunde stellen lineare Ereignisspeicher temporäre Speicher dar.

Wird beispielsweise ein über m einzelne Speicherzellen verfügender, linearer Energiespeicher nicht nur von einer einzigen Ereignisquelle mit Ereignissen versorgt, sondern von n unterschiedlichen Ereignisquellen $E_i$ mit jeweils unterschiedlichen Ereignissen $E_{ij}$ zu Zwecken ihrer Abspeicherung befüllt, so kann keine Aussage darüber getroffen werden, wie viele Ereignisse aus jeder einzelnen Ereignisquelle $E_i$ im linearen Ereignisspeicher vorhanden sind. Grundsätzlich können aus jeder einzelnen Ereignisquelle keine oder auch m Ereignisse innerhalb des linearen Ereignisspeichers festgehalten worden sein. Insbesondere in Fällen, in denen Ereignisquellen mit unterschiedlicher Statistik oder Häufigkeit Ereignisse generieren, tritt das Problem auf, dass jene Ereignisse, die jeweils aus einer Ereignisquelle stammen, die sehr häufig Ereignisse generiert, durch entsprechend häufiges Abspeichern innerhalb des linearen Ereignisspeichers jene Ereignisse aus dem linearen Speicher verdrängen, die aus Ereignisquellen stammen, aus denen sehr selten Ereignisse hervorgehen. Zwar kann, wie eingangs bereits erwähnt, durch Vorsehen einer sehr großen Speichertiefe m, d.h. eine große Anzahl einzelner Speicherzellen längs des linearen Ereignisspeichers, die Verdrängungswahrscheinlichkeit verringert werden, doch setzt dies einen sehr großen Hardware-technischen und letztlich hohen finanziellen Aufwand voraus, den es gilt zu vermeiden.

Der Erfindung liegt die Aufgabe zugrunde, eine Vorrichtung zum Speichern von Ereignissen mit einer Speicheranordnung, die mit n unterschiedlichen Ereignisquellen $E_i$ mit i = 1, ..., n, in Verbindung steht, deren Ereignisse $E_{ij}$, mit j = 1,2,3, ..., zumindest temporär in die Speicheranordnung abspeicherbar sind, derart anzugeben, dass einerseits gewährleistet sein soll, dass unabhängig von der Statistik des Auftretens unterschiedlicher Ereignisse aus den jeweiligen Ereignisquellen, insbesondere selten auftretende Ereignisse der Speicheranordnung vorbehalten bleiben und nicht von häufiger auftretenden Ereignisse verdrängt werden. Um dies zu gewährleisten, sollen keine Hardware-technisch und finanziell aufwendigen Maßnahmen getroffen werden. Zugleich ist jedoch sicherzustellen, dass das Abspeichern der Ereignisse mit einer hohen Zuverlässigkeit erfolgt, so dass die Speicheranordnung auch den Anforderungen von Prüf- oder Eichbehörden entspricht. Ferner gilt es, ein entsprechendes Speicherverfahren anzugeben, dessen Einsatz die vorstehende Problematik in gleicher Weise zu lösen vermag.

Die Lösung der der Erfindung zugrunde liegenden Aufgabe ist im Anspruch 1 angegeben. Gegenstand des Anspruches 8 ist ein Verfahren zum Speichern von Ereignissen mit einer Speicheranordnung. Den Erfindungsgedanken vorteilhaft weiterbildende Merkmale sind Gegenstand der Unteransprüche sowie der Beschreibung unter Bezugnahme auf die Ausführungsbeispiele zu entnehmen.

Erfindungsgemäß ist eine Vorrichtung gemäß dem Oberbegriff des Anspruches 1 derart weitergebildet, dass die Speicheranordnung in eine erste und zweite Speicherstufe unterteilbar ist. Die erste Speicherstufe weist n einzelne Speichereinheiten auf, von denen jede Speichereinheit mit einer der n Ereignisquellen $E_i$ in Verbindung steht. Vorzugsweise sind die einzelnen Speichereinheiten in Form linearer Ereignisspeicher der eingangs beschriebenen Art ausgebildet und verfügen maximal über eine Anzahl k längs einer Reihe miteinander verschalteter Speicherzellen.

Die zweite Speicherstufe der erfindungsgemäß ausgebildeten Speicheranordnung weist eine weitere Speichereinheit, vorzugsweise der vorstehend genannten Art in Form eines linearen Ereignisspeichers auf, mit der die n Speichereinheiten der ersten Speicherstufe in Verbindung stehen. Die weitere Speichereinheit der zweiten Speicherstufe weist darüber eine Speicherkapazität auf, die letztlich durch die Anzahl der längs einer Reihe angeordneter Speicherzellen bestimmt ist, die gleich oder vorzugsweise größer jener Speicherkapazität der jeweils einzelnen n Speichereinheiten in der ersten Speicherstufe ist.

Die erfindungsgemäß ausgebildete Speicheranordnung weist demzufolge eine kaskadierte Speicherstruktur auf, die eine erste Kaskade in Form der ersten Speicherstufe aufweist, in der ebenso viele einzelne, vorzugsweise in Art von Schieberegistern ausgebildete Speichereinheiten vorgesehen sind, wie einzelne Ereignisquellen vorhanden sind. Nicht notwendigerweise ist es erforderlich, dass jede der einzelnen Speichereinheiten über gleich viel Speicherzellen und damit über eine jeweils gleiche Speicherkapazität verfügt, beispielsweise wäre es möglich, die Speicherkapazität der einzelnen Speichereinheiten in der ersten Speicherstufe in Abhängigkeit der Häufigkeit zu wählen, mit der die mit der jeweiligen Speichereinheit verbundene Ereignisquelle entsprechende Ereignisse zu generieren vermag. Im Weiteren wird jedoch davon ausgegangen, dass alle Speichereinheiten in der ersten Speicherstufe über gleich viel Speicherzellen und somit über identische Speicherkapazitäten verfügen.

Es sei angenommen, dass die Speichereinheiten der ersten Speicherstufe jeweils über k einzelne Speicherzellen verfügen. Hierdurch ist sichergestellt, dass jede einzelne Ereignisart k-fach im Rahmen der ersten Speicherstufe abgespeichert wird und auch abgespeichert bleibt.

In der zweiten Kaskadenstufe bzw. Speicherstufe sind alle einzelnen Speichereinheiten der ersten Speicherstufe mit einer einzigen Speichereinheit verbunden, deren Speicherkapazität gleich, vorzugsweise größer gewählt ist als die Speicherkapazität der Speichereinheiten in der ersten Speicherstufe, das bedeutet, dass in der zweiten Speicherstufe ein Zusammenfluss aller Ereignisse längs eines einzigen in Form eines Schieberegisters ausgebildeten linearen Ereignisspeicher stattfindet.

Es sei angenommen, dass die Speichereinheit der zweiten Speicherstufe über l einzelne Speicherzellen verfügt, wobei l größer, vorzugsweise viel größer ist, d.h. wenigstens 5-fach größer als die Anzahl k der Speicherzellen in den jeweiligen Speichereinheiten der ersten Speicherstufe. Somit ergibt sich eine Gesamtspeicherkapazität m in der folgenden Weise:

$$m = n \cdot k + I.$$

Eine alternative Ausbildungsform zur vorstehend beschriebenen Kaskadenspeicheranordnung, die lediglich eine einzige, weitere Speichereinheit in der zweiten Speicherstufe vorsieht, weist zwei oder mehr weitere Speichereinheiten in der zweiten Speicherstufe auf, von denen jede einzelne Speichereinheit der zweiten Speicherstufe mit einer ausgewählten Gruppe einzelner Speichereinheiten der ersten Speicherstufe in Verbindung steht. Beispielsweise könnten die Speichereinheiten der ersten Speicherstufe derart in Gruppen unterteilt werden, dass jene Speichereinheiten, die mit Ereignisquellen verbunden sind, die über eine hohe Ereignishäufigkeit verfügen, zu einer Gruppe zusammengefasst werden, wohingegen übrige Speichereinheiten, die mit Ereignisquellen verbunden sind, die nur selten Ereignisse zu generieren vermögen, zu einer weiteren Gruppe zusammengefasst werden. Die einzelnen aus mehreren Speichereinheiten bestehenden Gruppen sind mit jeweils einer einzigen weiteren Speichereinheit im Rahmen der zweiten Speicherstufe verbunden. Das letztgenannte Ausführungsbeispiel weist nicht nur eine erhöhte Gesamtspeicherkapazität m' = n · k + l · z, wobei z die Anzahl der weiteren Speichereinheiten in der zweiten Speichereinheit ist, auf. Darüber hinaus verbessert sich die zeitliche Archivierung insbesondere von seltener auftretenden Ereignissen, die nicht nur längs der jeweils mit den Ereignisquellen direkt verbundenen Speichereinheiten im Rahmen der ersten Speicherstufe abgespeichert werden können, sondern auch in einer weiteren Speichereinheit der zweiten Speicherstufe abgespeichert werden, in der jedoch kein Verdrängungswettbewerb mit sehr häufig auftretenden Ereignissen stattfindet. Je nach Anwendungs- und Einsatzfall kann die kaskadierte Speicheranordnung in der zweiten Speicherstufe mit nur einer Speichereinheit als auch mit mehreren Speichereinheiten ausgestattet werden.

In besonders vorteilhafter Weise erfolgt die Abspeicherung der Ereignisse insbesondere innerhalb der Speichereinheit der zweiten Speicherstufe unter Bewahrung der Identifikationsmöglichkeit der einzelnen Ereignisse, d.h. im Hinblick auf ihre Herkunft sowie nach Anzahl der pro Ereignisquelle aufgetretenen Ereignisse. Für eine sinnvolle Auswertung der Ereignisse, die über eine statistische Betrachtung hinausgeht, ist eine Identifikationsmöglichkeit zwingende Voraussetzung Die Bewahrung der Identifikation jedes einzelnen Ereignisses erfolgt typischerweise durch Indizierung der Ereignisse hinsichtlich der Ereignisquelle sowie eines weiteren Merkmals wie beispielsweise einer Zeitmarke oder der Anzahl der pro Ereignisquelle aufgetretenen Ereignisse.

In einer besonders vorteilhaften Anwendungsform eignet sich die erfindungsgemäß ausgebildete Vorrichtung zur Speicherung von Ereignissen, die beim Betrieb eines Wärmezählers auftreten. Üblicherweise finden Wärmezähler Einsatz in Haushalten oder industriellen Warmwasser-Verbraucherstellen, um einen behördlich anerkannten Nachweis über den tatsächlichen Warmwasser-Verbrauch führen zu können. Derartige Wärmezähler weisen typischerweise Messsensoren auf, die den Wärmestrom, bspw. in Form eines Warmwasserstromes erfassen. Ist beispielsweise der Warmwasserstrom durch Gas- oder Lufteinschlüsse unterbrochen, so werden derartige Ereignisse von einem entsprechenden Sensor erfasst und in Form von Sensorsignalen umgesetzt. Der Sensor stellt in der vorstehenden Terminologie eine Ereignisquelle dar und die Sensorsignale die Ereignisse. Eine weitere Ereignisquelle könnte in der Überwachung der Funktionsfähigkeit der die Messsignale weiter verarbeitenden Rechnereinheit gesehen werden. Im Falle eines Rechnerabsturzes werden geeignete Ereignissignale generiert. Es liegt auf der Hand, dass die Häufigkeit mit der Rechnerabstürze auftreten wesentlich geringer ist als beispielsweise Unregelmäßigkeiten innerhalb des Wärmestromes. Mit Hilfe der lösungsgemäßen Speicheranordnung ist es möglich, die Funktionstüchtigkeit und -fähigkeit an sich bekannter Wärmezähler durch die Erfassung und insbesondere Abspeicherung entsprechender Ereignissignale zu dokumentieren und archivieren. Erst durch eine derartige Dokumentation ist es möglich, einen einwandfreien Nachweis über die tatsächlich verbrauchte Energie beispielsweise in einem Haushalt durch Warmwasser-Verbrauch zu belegen.

Der vorstehend beschriebenen Vorrichtung zum Speichern von Ereignisquellen liegt darüber hinaus ein übergeordnetes Verfahrenskonzept zugrunde, das sich aus zwei Verfahrensschritten zusammengesetzt. Zunächst werden die pro Ereignisquelle generierten Ereignisse in jeweils eine den jeweiligen Ereignisquellen zugeordnete Speichereinheit abgespeichert. In einem zweiten Schritt erfolgt ein Umspeichern eines in der jeweiligen Speichereinheit abgespeicherten Ereignisses in eine weitere Speichereinheit bei Erreichen der Speicherkapazität der jeweiligen Speichereinheit. Hierbei werden in die weitere Speichereinheit die Ereignisse aller oder einer begrenzten Anzahl von Speichereinheiten bei Überschreiten ihrer jeweiligen Speicherkapazitäten umgespeichert.

Das Abspeichern bzw. Umspeichern der einzelnen Ereignisse in die jeweiligen Speichereinheiten beruht auf der Funktionsweise eines Schieberegisters; d.h. für ein Abspeichern eines neuen Ereignisses in eine Speichereinheit ist zunächst ein Umspeichern aller bereits in der Speichereinheit enthaltenen Ereignisse um eine weitere Speicherzelle erforderlich. Ist eine Speichereinheit vollständig mit Ereignissen belegt, so wird für ein Abspeichern eines neuen Ereignisses das jeweils älteste in der Speichereinheit abgespeicherte Ereignis verworfen.

Die Erfindung wird nachstehend ohne Beschränkung des allgemeinen Erfindungsgedanken anhand von Ausführungsbeispielen unter Bezugnahme auf die Zeichnungen exemplarisch beschrieben. Es zeigen

Fig. 1 schematisierte Darstellung einer lösungsgemäß ausgebildeten Speicheranordnung und

Fig. 2 schematisierte Darstellung einer alternativ ausgebildeten Speicheranordnung.

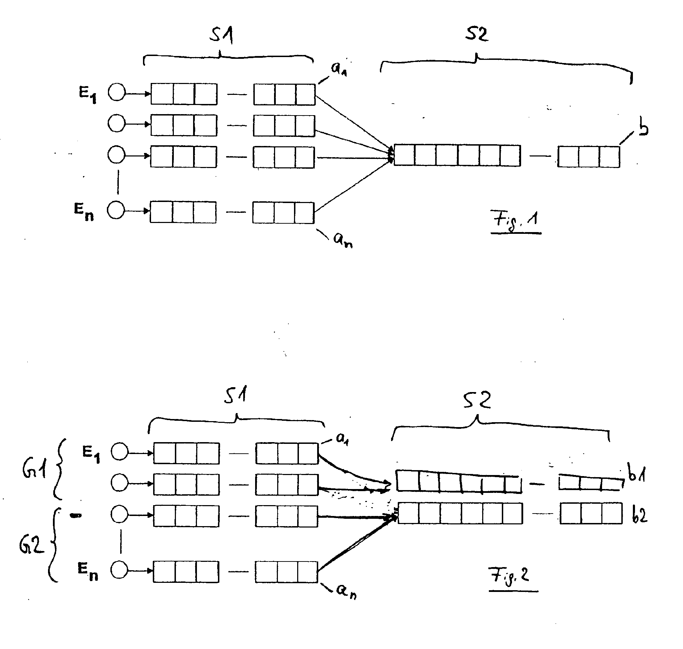

In Fig. 1 ist ein schematisiertes Speicherschema dargestellt, das kaskadenartig ausgebildet ist und eine erste Speicherstufe S1 sowie eine zweite Speicherstufe S2 vorsieht. In der ersten Speicherstufe S1 sind jeweils n einzelne Speichereinheiten $a_1$ bis $a_n$ vorgesehen, die jeweils einzeln mit entsprechenden Ereignisquellen $E_1$ bis $E_n$ verbunden sind. Jede einzelne Speichereinheit $a_1$ bis $a_n$ verfügt über k einzelne Speicherzellen, in die jeweils ein Ereignis abspeicherbar ist. Das Abspeicherungsprinzip der Ereignisse erfolgt, wie vorstehend ausführlich dargelegt, nach dem Prinzip eines Schieberegisters. In der zweiten Speicherstufe S2 ist eine einzige Speichereinheit b vorgesehen, die über I einzelne Speicherzellen verfügt, wobei I typischerweise sehr viel größer als k ist. Insofern stellt die Speichereinheit b im Rahmen der zweiten Speicherstufe S2 eine Art Hauptspeicher dar. Aus der Schemadarstellung gemäß Fig. 1 ist ersichtlich, dass alle Speichereinheiten $a_1$ bis $a_n$ der ersten Speicherstufe S1 mit der einzigen Speichereinheit b der zweiten Speicherstufe S2 verbunden sind, so dass ein Zusammenfluss der Ereignisse aus den Speichereinheiten der Speicherstufe S1 in den einzigen Hauptspeicher b der Speicherstufe S2 erfolgt. Als Gesamtspeicherkapazität m ergibt sich $m = k \cdot n + I$.

Das in Fig. 1 dargestellte Speicherschema garantiert aufgrund der ersten Speicherstufe S1, dass aus jeder Ereignisquelle $E_1$ bis $E_n$ unabhängig von der entsprechenden Ereignisstatistik mindestens k Ereignisse im Ereignisspeicher vorhanden sind und auch entsprechend vorhanden bleiben.

In Fig. 2 ist ein alternatives Ausführungsbeispiel mit zwei weiteren Speichereinheiten $b_1$ und $b_2$ dargestellt. Die Speicheranordnung ist gleichsam dem Ausführungsbeispiel in Fig. 1 in eine erste und zweite Speicherstufe S1, S2 unterteilt. Die erste Speicherstufe S1 weist n einzelne Speichereinheiten $a_1,..., a_n$ auf, von denen jede Speichereinheit mit einer der n Ereignisquellen $E_1$ bis $E_n$ in Verbindung steht. Die n Speichereinheiten $a_1,..., a_n$ sind in eine erste und eine zweite Gruppe G1, G2 von Speichereinheiten unterteilt. Die Unterteilung erfolgt vorzugsweise derart, dass jene Speichereinheiten, die mit Ereignisquellen verbunden sind, die über eine hohe Ereignishäufigkeit verfügen, zur Gruppe G1 zusammengefasst werden, wohingegen die übrigen Speichereinheiten, die mit Ereignisquellen verbunden sind, die nur selten Ereignisse zu generieren vermögen, zur zweiten Gruppe G2 zusammengefasst werden.

Die einzelnen aus mehreren Speichereinheiten bestehenden Gruppen G1, G2 sind mit jeweils einer einzigen weiteren Speichereinheit $b_1$ bzw. $b_2$ im Rahmen der zweiten Speicherstufe S2 verbunden. Das dargestellte Ausführungsbeispiel weist eine erhöhte Gesamtspeicherkapazität $m' = n \cdot k + I \cdot 2$ auf, wobei die Speicherkapazität I gleich, vorzugsweise deutlich größer als die Speicherkapazität k der jeweils einzelnen n Speichereinheiten ($a_1,..., a_n$) ist.

**Patentansprüche**

1. Vorrichtung zum Speichern von Ereignissen mit einer Speicheranordnung, die mit n Ereignisquellen $E_i$, mit i = 1,..., n, in Verbindung steht, deren Ereignisse $E_{ij}$, mit j= 1, 2, 3, ..., zumindest temporär in die Speicheranordnung abspeicherbar sind, **dadurch gekennzeichnet, dass** die Speicheranordnung in eine erste und zweite Speicherstufe (S 1, S2) unterteilbar ist,
dass die erste Speicherstufe (S1) n einzelne Speichereinheiten ($a_1,..., a_n$) aufweist, von denen jede Speichereinheit mit einer der n Ereignisquellen E1 in Verbindung steht,
dass die zweite Speicherstufe (S2) eine weitere Speichereinheit (b) aufweist, mit der die n Speichereinheiten ($a_1,..., a_n$) in Verbindung stehen, und dass die weitere Speichereinheit (b) eine Speicherkapazität (I) aufweist, die gleich oder größer jener Speicherkapazität (k) der jeweils einzelnen n Speichereinheiten ($a_1,..., a_n$) ist.

2. Vorrichtung zum Speichern von Ereignissen mit einer Speicheranordnung, die mit n Ereignisquellen $E_i$, mit i = 1,..., n, in Verbindung steht, deren Ereignisse $E_{ij}$, mit j= 1, 2, 3, ..., zumindest temporär in die Speicheranordnung abspeicherbar sind, **dadurch gekennzeichnet, dass** die Speicheranordnung in eine erste und zweite Speicherstufe (S1, S2) unterteilbar ist, das die erste Speicherstufe (S1) n einzelne Speichereinheiten ($a_1,..., a_n$) aufweist, von denen jede Speichereinheit mit einer der n Ereignisquellen E in Verbindung steht, dass die n Speichereinheiten ($a_1,..., a_n$) in wenigstens eine erste und eine zweite Gruppe (G1, G2) von Speichereinheiten unterteilbar sind, dass die zweite Speicherstufe (S2) eine erste weitere und zweite weitere Speichereinheit ($b_1$, $b_2$) aufweist, von denen die erste weitere Speichereinheit ($b_1$) mit den Speichereinheiten der ersten Gruppe (G1) und die zweite weitere Speichereinheit ($b_2$) mit den Speichereinheiten der zweiten Gruppe (G2) in Verbindung stehen, und
dass die erste weitere und zweite weitere Speichereinheit ($b_1$, $b_2$) jeweils eine Speicherkapazität (I) aufweist, die gleich oder größer jener Speicherkapazität (k) der jeweils einzelnen n Speichereinheiten ($a_1,..., a_n$) ist.

3. Vorrichtung nach Anspruch 1 oder 2, **dadurch gekennzeichnet, dass** die Speichereinheiten ($a_1...,  a_n$, b, $b_1$, $b_2$) als lineare Ereignisspeicher jeweils in Art eines linearen Schieberegisters ausgebildet sind, deren Speicherkapazität jeweils durch eine Vielzahl in Serie geschalteter Speicherzellen bestimmt ist.

4. Vorrichtung nach Anspruch 3, **dadurch gekennzeichnet, dass** die n Speichereinheiten ($a_1,..., a_n$) der ersten Speicherstufe (S1) maximal k Speicherzellen und die jeweils weitere Speichereinheit (b, $b_1$, $b_2$) der zweiten Speicherstufe (S2) maximal I Speicherzellen aufweisen, und
dass für eine Gesamtspeicherkapazität m der ersten und zweiten Speicherstufe gilt:

$$m = n \cdot k + z \cdot I, \text{ mit } z = 1, 2, 3$$

5. Vorrichtung nach einem der Ansprüche 1 bis 4, **dadurch gekennzeichnet, dass** die n Ereignisquellen $E_i$ Ereignisse $E_{ij}$ generieren, die sowohl nach jeweils der Anzahl j der pro Ereignisquelle aufgetretenen Ereignisse als auch nach der Ereignisquelle i selbst identifizierbar sind, und
dass die Speichereinheiten ($a_1,..., a_n$, b, $b_1$, $b_2$) derart ausgebildet sind, dass die Identifizierbarkeit der in den Speichereinheiten der ersten und zweiten Speicherstufe (S1, S2) abgespeicherten Ereignisse $E_{ij}$ erhalten bleibt.

6. Verwendung einer Vorrichtung nach einem der Ansprüche 1 bis 5 zur Speicherung von beim Betrieb eines Wärmezählers auftretenden Ereignissen.

7. Verwendung nach Anspruch 6, **dadurch gekennzeichnet, dass** die Ereignisse von wenigstens folgenden Ereignisquellen herrühren und gespeichert werden:

 - Auftreten von Lufteinschlüssen innerhalb des den Wärmezähler durchströmenden Wärmemediums,
 - Auftreten eines Sensorfehlers beim Erfassen der Lufteinschlüsse,
 - Auftreten von Systemfehlern, wie fehlerhafte Energieversorgung,
 - fehlerhafte Datenspeicher,
 - Auftreten von externen Manipulationen am gesamten Wärmezähler oder Teilen davon, wie beispielsweise an einem Temperatursensor, oder
 - fehlerhafte Signalauswertung bei erfassten Sensorsignalen.

8. Verfahren zum Speichern von Ereignissen mit einer Speicheranordnung bei dem n Ereignisquellen $E_i$, mit i = 1,..., n, jeweils Ereignisse $E_{ij}$, mit j= 1, 2, 3, ..., generieren, die zumindest temporär gespeichert werden, **gekennzeichnet durch** folgende Verfahrensschritte:

- Abspeichern der pro Ereignisquelle $E_i$ generierten Ereignisse $E_{ij}$ in jeweils eine der jeweiligen Ereignisquelle zugeordneten Speichereinheit ($a_1$,..., $a_n$), und
- Umspeichern eines in der jeweiligen Speichereinheit ($a_1$,..., $a_n$) abgespeicherten Ereignisses in eine weitere Speichereinheit (b, $b_1$, $b_2$) bei Erreichen der Speicherkapazität der jeweiligen Speichereinheit($a_1$..., $a_n$), wobei in die weitere Speichereinheit (b, $b_1$, $b_2$) die Ereignisse aller oder einer begrenzten Anzahl von Speichereinheiten bei Überschreiten ihrer jeweiligen Speicherkapazitäten umgespeichert werden.

9. Verfahren nach Anspruch 8, **dadurch gekennzeichnet, dass** das Abspeichern der pro Ereignisquelle $E_i$ generierten Ereignisse $E_{ij}$ in zeitlicher und serieller Abfolge in einem linearen Ereignisspeicher erfolgt, der in Art eines Schieberegisters ausgebildet ist.

10. Verfahren nach Anspruch 8 oder 9, **dadurch gekennzeichnet, dass** bei einer Speicherkapazität pro Speichereinheit ($a_1$,..., $a_n$) von maximal k abspeicherbaren Ereignissen $E_{jk}$ zum Abspeichem eines weiteren Ereignisses $E_{i,k+1}$ das Ereignis $E_{i,1}$ in die weitere Speichereinheit (b, $b_1$, $b_2$) umgespeichert wird, und dass bei weiteren in eine vollständig mit Ereignissen besetzte Speichereinheit ($a_1$,..., $a_n$) abzuspeichemden Ereignissen jeweils die in der Speichereinheit ($a_1$,..., $a_n$) abgespeicherten ältesten Ereignisse umgespeichert werden.

11. Verfahren nach einem der Ansprüche 8 bis 10, **dadurch gekennzeichnet, dass** die Umspeicherung in die weitere Speichereinheit (b, $b_1$, $b_2$) derart erfolgt, dass die Identifizierbarkeit der umgespeicherten Ereignisse $E_{ij}$ nach Ereignisquelle $E_i$ und Ereignisanzahl j pro Ereignisquelle erhalten bleibt.

12. Verfahren nach einem der Ansprüche 8 bis 11, **dadurch gekennzeichnet, dass** bei Erreichen der Speicherkapazitätsgrenze I der weiteren Speichereinheit (b, $b_1$, $b_2$) das jeweils in der weiteren Speichereinheit (b, $b_1$, $b_2$) abgespeicherte älteste Ereignis $E_{ij}$ verworfen wird.

S1

S2

$E_1$

$a_1$

$b$

$E_n$

$a_n$

Fig. 1

S1

S2

G1

$E_1$

$a_1$

$b_1$

$b_2$

G2

$E_n$

$a_n$

Fig. 2